# EUROPÄISCHE PATENTSCHRIFT

(11) **EP 4 431 783 B1**
(45) Veröffentlichungstag und Bekanntmachung des Hinweises auf die Patenterteilung: **12.02.2025**
(21) Anmeldenummer: 23162294.5
(22) Anmeldetag: 16.03.2023
(51) Int. Cl.: F16L 55/165, F16L 11/08

(54) **SCHLAUCHFÖRMIGER LINER**
TUBULAR LINER
REVETEMENT TUBULAIRE

(43) Veröffentlichungstag der Anmeldung: 18.09.2024
(73) Patentinhaber: SAERTEX multiCom GmbH, 48369 Saerbeck (DE)
(72) Erfinder: FÜCHTJOHANN, Nils, 48268 Greven (DE); FELDBRÜGGE, Christoph, 48163 Münster (DE)
(74) Vertreter: Michalski Hüttermann & Partner Patentanwälte mbB

(56) Entgegenhaltungen:
- DE-A1- 102014 114 746
- US-B2- 6 615 875

## Beschreibung

Die Erfindung betrifft einen schlauchförmigen Liner für die Sanierung von Rohrleitungen und Kanälen, einen ausgehärteten Liner, ein Verfahren zur Herstellung eines Liners, die Verwendung des Liners, ein Verfahren zum Sanieren von Rohrleitungen und Kanälen sowie eine sanierte Rohrleitung beziehungsweise Kanal.

Die meisten Lösungen für schlauchförmige Liner für die Sanierung von Rohrleitungen oder Kanälen beschreiben Faserschichten mit Fasern in zufälliger Anordnung (z.B. Vliese oder Schneidroving) oder Fasern, die in Längsrichtung des Liners ausgerichtet sind, um die mechanischen Kennwerte in Längsrichtung oder die nötige Stabilität für Einzugsliner zu verbessern. Fasern können grundsätzlich in Umfangsrichtung, also senkrecht zur Längsrichtung des Liners, ausgerichtet werden, um die mechanischen Kennwerte des Liners in Umfangsrichtung zu verbessern. Bisher wurden dazu entweder sehr kurze Faserabschnitte in Umfangsrichtung ausgerichtet, die meistens überlappend gelegt wurden. Solche Liner haben dann oft eine Längsnaht und sind dadurch schlechter in Umfangsrichtung dehnfähig. Oder es wurden durchgehende Fasern in Umfangsrichtung ausgerichtet, die sich in der Länge im Wesentlichen um den gesamten Umfang des Liners erstreckten. Bei diesen Lösungen musste bisher die äußerste Matte an der Längskante verbunden werden. Dadurch war dann bei diesen Lösungen die Dehnfähigkeit in Umfangsrichtung eingeschränkt. Diese Lösungen haben den Nachteil, dass sich der Liner beim Aufstellen in der zu sanierenden Rohrleitung schlechter oder nicht dehnen kann, so dass der ausgehärtete Liner dann am Altrohr nicht richtig anliegt.

US6615875B2 beschreibt einen Liner zur Verstärkung eines Rohres und Verfahren zu dessen Herstellung.

DE102014114746A1 beschreibt einen Liner für Kanalsanierung.

Die Aufgabe der vorliegenden Erfindung ist es daher, diese Nachteile des Standes der Technik zu überwinden und eine Technologie bereitzustellen, mit der Liner erhalten werden, die auch in Umfangsrichtung gute mechanische Kennwerte aufweisen und dennoch genügend dehnbar sind, um sich an das Altrohr der zu sanierenden Leitungen besser anzulegen.

Die Erfindung zu Grunde liegende Aufgabe wird daher durch einen schlauchförmiger Liner für die Sanierung von Rohrleitungen und Kanälen gelöst, der harzgetränkte Faserschichten umfasst, wobei wenigstens eine Faserschicht eine Querfaserschicht ist, die (überwiegend) Fasern aufweist, die in einem Winkel in einem Bereich von 45° bis 135° relativ zur Längsrichtung des Liners angeordnet sind, wobei diese so angeordneten Fasern der Querfaserschicht überwiegend im Median eine Länge in einem Bereich von 20 bis 50% des Umfangs des Liners aufweisen.

Mehrere Schichten können eine Matte bilden. Beispielsweise kann eine Matte aus einer Schicht Direktroving, einer Querfaserschicht und einer Schicht aus Schneidroving bestehen. Diese Schichten können miteinander vernäht sein.

Der erfindungsgemäße Liner hat zum einen den Vorteil, dass dieser Liner flexibler ist und weniger Arbeitsdruck benötigt wird. Arbeitsdruck im Sinne der Erfindung ist der Druck, der während der Installation aufrecht erhalten wird, um den Liner an das Altrohr zu drücken. Zum anderen hat der Liner durch die gewonnene Flexibilität den Vorteil, dass sich im sanierten Rohr Seitenzuläufe wie beispielsweise Hausanschlüsse abzeichnen können ("Dimpeln") und so leichter identifiziert werden können.

Das Wort "überwiegend" im Sinne der Erfindung bedeutet bei Massenangaben mehr als 50 Gew.%.

Außen im Sinne der Erfindung bedeutet der Rohrinnenwand der zu sanierenden Rohrleitung beziehungsweise Kanal zugewandt. Innen im Sinne der Erfindung bedeutet der Rohrinnenwand der zu sanierenden Rohrleitung beziehungsweise Kanal abgewandt. Dies ist wichtig, da es beispielsweise sogenannte Einzugsliner gibt, bei denen die äußerste Schicht vor und nach dem Einbau außen liegt. Es gibt aber auch sogenannte Inversionsliner, bei denen eine zunächst innenliegende Schicht in der sanierten Rohrleitung beziehungsweise Kanal außen liegt.

### Schichten des Liners

Der Liner kann wenigstens eine Außenschicht aufweisen (beispielsweise Lichtschutzfolie, Außenfolie, ...). Die Außenschicht kann eine Monomerbarrierelage aufweisen. Diese Monomerbarrierelage soll die Diffusion von Reaktivverdünnern wie beispielsweise Styrol von unausgehärtetem Harzsystem verhindern. Die Außenschicht weist vorzugsweise eine Dicke in einem Bereich von 40 bis 2000 µm auf. Die Außenschicht ist vorteilhafterweise nicht für UV-Strahlung durchlässig, damit das Harzsystem in der harzgetränkten Faserschicht nicht beispielsweise bei der Lagerung oder beim Transport aushärtet. Die Außenschicht kann beispielsweise aus Polymer oder auch aus einem Vlies mit aufkaschiertem Polymer bestehen. Als Material für Polymer und/oder Vlies kommen beispielsweise Polyester, Polyamid, Polyvinylchlorid, Polyacrylnitril, Polyethylen, Polypropylen und/oder Mischungen derselben in Frage.

Der Liner kann wenigstens eine Verankerungsschicht aufweisen. Die Verankerungsschicht, die vorzugsweise aus einem thermoplastischen Material besteht, weist wiederum vorzugsweise eine Dicke in einem Bereich von 10 bis 5000 µm, insbesondere 30 bis 500 µm auf. Die Verankerungsschicht besteht vorteilhafterweise aus einem Vlies oder einem Schmelzklebstoff oder einer Kombination dieser Varianten. Ganz besonders bevorzugt besteht das Vlies aus Glas, thermoplastischen Materialien, PAN, oder Mischungen derselben. Die thermoplastischen Materialien sind beispielsweise ausgewählt aus Polyethylen, Polypropylen oder Polyester. Der Schmelzklebstoff ist beispielsweise Polyamid, Polyethylen, APAO (amorphes Polyolefin), EVAC (Ethylenvinylacetat-Copolymer), TPE-E (Polyester-Elastomer), TPE-U (Polyurethan-Elastomer), TPE-A (Copolyamid-Elastomer) oder Vinylpyrrolidon/Vinylacetat-Copolymer, sowie Mischungen derselben.

Der Liner kann eine Innenschicht aufweisen. Die Innenschicht kann eine Monomerbarrierelage aufweisen. Die Innenschicht weist vorteilhafterweise eine Dicke in einem Bereich von 100 bis 1500 µm auf. Insbesondere weist die Innenschicht eine Dicke in einem Bereich von 100 bis 600 µm auf. Dadurch kann diese Innenschicht zum einen vor mechanischen Verletzungen beispielsweise durch das Gerät zur Aushärtung der harzgetränkten Faserschicht geschützt werden, ist aber andererseits noch dünn genug, um genügend Wärme oder UV-Strahlung für die Aushärtung durchzulassen. Diese Innenschicht weist vorteilhafterweise mehrere Lagen auf. Eine dieser Lagen ist beispielsweise eine Monomerbarrierelage. Diese Monomerbarrierelage soll die Diffusion von Reaktivverdünnern wie beispielsweise Styrol von unausgehärtetem Harzsystem verhindern. Diese Monomerbarrierelage ist vorteilhafterweise eine der Lagen der Innenschicht, die nicht außen ("außen" meint hier "für den Betrachter sichtbar" und/oder "an die Verankerungsschicht angrenzend") liegt. Die Monomerbarrierelage enthält beispielsweise zu wenigstens 50 Gew.% und besteht insbesondere bevorzugt aus Polyamid, Ethylen-Vinylalkohol-Copolymer, PBT, PET, halogenierten Polymeren oder Mischungen derselben. Besonders bevorzugt besteht die Monomerbarrierelage aus einem oder mehreren dieser Materialien. Die Monomerbarrierelage weist vorteilhafterweise eine Dicke in einem Bereich von 10 bis 500 µm auf.

Die Innenschicht weist vorteilhafterweise wenigstens eine und vorteilhafterweise zwei außenliegende Lagen ("außen" meint hier "für den Betrachter sichtbar" und/oder "an die Verankerungsschicht angrenzend") aus Polyurethan, Polyethylen oder Polypropylen auf. Diese außen liegende Lage weist vorteilhafterweise eine Dicke in einem Bereich von 50 bis 1000 µm auf. Beispielsweise kann die an die Verankerungsschicht angrenzende außen liegende Lage (beispielsweise als Haftlage) dünner sein als die andere außen liegende Lage, die der Schlauchmitte zugewandt ist (nämlich beispielsweise einer Verschleißlage). Dadurch kann die Innenschicht noch besser vor mechanischen Einflüssen schützen.

Vorzugsweise sind zumindest die Verankerungsschicht und die Innenschicht stoffschlüssig oder kraftschlüssig miteinander verbunden. Dadurch dass zumindest diese beiden Schichten vorzugsweise miteinander stoffschlüssig oder kraftschlüssig verbunden sind, können diese Schichten sich im nicht relativ zueinander bewegen. Dadurch wird die Stabilität des gesamten Schichtaufbaus erheblich verbessert. Weiterhin erfährt die Innenschicht durch die damit verbundene Verankerungsschicht eine erhebliche Verstärkung, so dass die Innenschicht nicht mehr leicht verletzt werden kann.

Stoffschlüssig oder kraftschlüssig im Sinne der Erfindung kann vorteilhafterweise bedeuten, dass die jeweiligen Schichten miteinander entweder vollflächig oder teilweise kaschiert, laminiert oder verklebt sind. Falls die Schichten teilweise miteinander verbunden sind, so sind vorzugsweise zumindest 40 % der Fläche der Schichten miteinander verbunden oder alternativ punktuell verbunden. Im kann so ein Verrutschen der Schichten gegeneinander vollständig vermieden werden. Die Schichten können zusätzlich oder alternativ auch so verbunden werden, dass ein hochfließfähiges thermoplastisches Material bei der Herstellung zwischen die Schichten extrudiert wird.

Vorzugsweise befindet sich ganz innen zur Rohrmitte hin eine Schicht aus Polyethylen, Polypropylen oder Polyurethan als außen liegende Lage der Innenschicht. Daran anschließend befindet sich vorteilhafterweise die Monomerbarrierelage als Lage der Innenschicht. Vorteilhafterweise kann zwischen der Verankerungsschicht und der Monomerbarrierelage eine Schicht aus Polyethylen oder Polypropylen als weitere Lage der Innenschicht vorgesehen sein.

Der Liner kann mehrere Faserschichten und davon wenigstens eine Querfaserschicht aufweisen.

### Faserschichten

Die Fasern können vorzugsweise Fasern aus Glas, Kohlenstoff, Polymer, Cellulose oder Mischungen derselben, ganz besonders bevorzugt aber Glas, sein.

Die Faserschichten oder zumindest wenigstens eine Faserschicht können aus Materialbahnen bestehen, die an ihren Längskanten miteinander verbunden sind. Diese Verbindung kann beispielsweise durch Vernähen oder durch Vernadeln erfolgen. So können schlauchförmige Faserschichten entstehen. Die Faserschichten können aber auch einfach zu einem schlauchförmigen Gebilde überlappend zusammengelegt werden, ohne im überlappenden Bereich verbunden zu werden. Bevorzugt ist die äußerste der Rohrinnenwand zugewandte Faserschicht an ihren Längskanten (beispielsweise durch Überlappen und dann Vernadelung) miteinander verbunden. Auch wenigstens eine Matte kann an der Längskante miteinander verbunden sein. Bevorzugt ist die äußerste der Rohrinnenwand zugewandte Matte an ihren Längskanten (beispielsweise durch Überlappen und dann Vernadelung) miteinander verbunden. Eine Matte kann mehrere Faserschichten aufweisen. Diese Faserschichten können beispielsweise Querfaserschichten, Schichten aus Direktroving oder Schichten aus Schneidrovinng sein. Auch eine Matte kann aus wenigstens einer Materialbahn bestehen, wobei dann die Materialbahn mehrere Faserschichten umfassen kann.

Die benachbarten Faserschichten oder auch benachbarten Matten können sich dadurch voneinander unterscheiden, dass die Längskanten der Materialbahnen versetzt sind.

Die Fasern können beispielsweise aus Bündeln von Filamenten bestehen.

Die Faserschicht ist vorzugsweise ein Gelege, ein Gewebe, Wirrfasermatte, ein Gestrick, ein Vlies, ein Filz, ein Gewirk oder eine Kombination oder ein mehrlagiger Aufbau dieser textilen Flächengebilde. Beispielsweise kann eine Querfaserschicht in derselben Schicht auch Schneidroving enthalten. Eine Faserschicht kann auch verschiedene Arten von Fasern enthalten (beispielsweise Poylmerfasern, Glasfasern, Carbonfasern, ...). Beispielsweise kann in einer Schicht ein Vlies mit einem Gelege kombiniert sein.

Die Matten können vorzugsweise jeweils ein Flächengewicht in einem Bereich von 200 bis 3000 g/m², mehr bevorzugt in einem Bereich von 400 bis 2600 g/m², und ganz besonders bevorzugt in einem Bereich von 700 bis 1800 g/m² aufweisen. Die Faserschichten können vorzugsweise jeweils ein Flächengewicht in einem Bereich von 50 bis 1000 g/m², mehr bevorzugt in einem Bereich von 100 bis 900 g/m², und ganz besonders bevorzugt in einem Bereich von 200 bis 600 g/m² aufweisen.

Der Liner kann vorzugsweise 1 bis 20 Matten, besonders bevorzugt 2 bis 15 Matten aufweisen. Der Liner kann vorzugsweise 3 bis 60 Faserschichten, besonders bevorzugt 6 bis 45 Faserschichten aufweisen.

Das Material für das Harzsystem kann ausgewählt sein aus der Gruppe ungesättigter Polyesterharze, Vinylesterharze, Epoxidharze, oder Mischungen derselben.

In der harzgetränkten Faserschicht ist das Harzsystem (vor der Installation) vorzugsweise nicht oder nur teilweise durchpolymerisiert. Nach der Installation kann das Harz durchpolymerisiert sein. In der Zusammensetzung des Harzsystems sind vorteilhafterweise 0,1 bis 20 Gewichtsanteile eines Eindickmittels (wie beispielsweise Isocyanat, Metallhydroxide, Metalloxide wie beispielsweise Magnesiumoxid oder Calciumoxid oder Mineralstoffe wie beispielsweise Kaolin oder Mischungen derselben) und insbesondere eines Isocyanats bezogen auf 100 Gewichtsanteile Harzsystem enthalten. Es hat sich herausgestellt, dass hierdurch in der Anwendung bei der Sanierung von Rohren die Zusammensetzung des Harzsystems hinreichend eingedickt ist, aber bei der Herstellung flüssig genug ist, um die Verankerungsschicht oder das Innenvlies und die Faserschicht vollständig zu tränken. Wenigstens die ganz außen liegende Faserschicht oder Matte ist vorzugsweise an der Längskante verbunden (beispielsweise überlappend und vernadelt oder verklebt oder gesteppt oder vernäht). Vorzugsweise weist die ganz außen liegende Matte ein Gelege auf, das vernadelt ist. Die ganz außen liegende Matte kann, aber muss nicht, eine Querfaserschicht enthalten.

### Querfaserschicht

Wenigstens eine der Faserschichten ist eine Querfaserschicht.

Die wenigstens eine Querfaserschicht unterscheidet sich vorzugsweise (überwiegend) von einer benachbarten Faserschicht durch die Anordnung der Fasern, das Material der Fasern, den Median der Länge der Fasern und oder das Flächengewicht benachbarten Schichten. Die wenigstens eine Querfaserschicht kann sich von einer benachbarten Faserschicht auch dadurch unterscheiden, dass die Verbindung oder Überlappung (oder auch Überlappung und Verbindung) der Längskanten der Materialbahnen in Umfangsrichtung versetzt ist.

Erfindungsgemäß weist die Querfaserschicht überwiegend (besonders bevorzugt wenigstens 60 Gew.%) Fasern auf, die in einem Winkel in einem Bereich 45° bis 135°, besonders bevorzugt von 80° bis 100°, relativ zur Längsrichtung des Liners angeordnet sind. Das Flächengewicht dieser Fasern in der Querfaserschicht kann vorzugsweise in einem Bereich von 50 bis 1000 g/m² liegen.

Die Querfaserschicht oder auch die Matte kann auch Fasern aufweisen, die relativ zur Längsrichtung +20° bis -20° ausgerichtet sind. Das Flächengewicht dieser Fasern in der Querfaserschicht oder Matte kann vorzugsweise in einem Bereich von 50 bis 1000 g/m² liegen.

Die Querfaserschicht oder Matte kann auch Schneidroving (beispielsweise CSM) enthalten. Das Flächengewicht dieser Fasern in der Querfaserschicht oder Matte kann vorzugsweise in einem Bereich von 50 bis 1000 g/m² liegen.

Die Querfaserschicht oder Matte kann vorzugsweise ein Gelege aufweisen. Das Gelege hat vorzugsweise eine Breite in einem Bereich von 90 bis 110% des Umfangs des Liners. Das Gelege hat vorzugsweise die Länge des Liners. Alternativ, und insbesondere bei sehr langen Linern, kann der Liner aber auch aus mehreren verbundenen Gelegen bestehen. Das Gelege ist vorzugsweise an beiden Längskanten des Geleges (beispielsweise durch Vernähen oder Vernadeln, entweder auf Stoß oder überlappend) miteinander verbunden, insbesondere wenn es die äußerste Querfaserschicht ist. So entsteht eine schlauchförmige Querfaserschicht oder Matte.

Wenigstens eine Querfaserschicht weist vorzugsweise überwiegend (besonders bevorzugt zu wenigstens 50 Gew.%, ganz besonders bevorzugt zu wenigstens 60 Gew.%) Fasern auf, die relativ zur Längsrichtung des Liners in einem Winkel in einem Bereich von 45° bis 135° ausgerichtet sind und die je Faser an wenigstens einer Stelle, bevorzugt an wenigstens 2 Stellen, weiter bevorzugt an 1 bis 10 Stellen, durchtrennt sind. Diese Stellen der Durchtrennung haben vorzugsweise zum Faserende einen Abstand in einem Bereich von 5 bis 100 cm, besonders bevorzugt in einem Bereich von 10 bis 50 cm. Diese Stellen der Durchtrennung haben vorzugsweise zum Faserende einen Abstand in einem Bereich von 2 bis 20% des Umfangs des Liners, besonders bevorzugt in einem Bereich von 5 bis 15% des Umfangs des Liners. Diese Stellen der Durchtrennung weisen alternativ zum Faserende oder der benachbarten Stelle der Durchtrennung wenigstens einen Abstand a = (Umfang/(Anzahl+1)) - 40%, wobei Umfang der Umfang des Liners ist und Anzahl die Anzahl der Stellen der Durchtrennung. Die Durchtrennungen (beispielsweise Schnitte) können auch zufällig angeordnet sein und eine zufällige Länge haben. Die Anzahl der Durchtrennungen pro Fläche und Länge der Durchtrennungen findet dort seine Grenze, wo das Material nicht mehr verarbeitbar wird. Vorzugsweise sind die Durchtrennungen (wie beispielsweise Schnitte) gruppiert. Die Fasern der Querfaserschicht sind vorzugsweise durch Schnitte in Längsrichtung des Liners jeweils mit einer Länge von 0,5 bis 50 cm durchtrennt. Die Fasern der Querfaserschicht sind beispielsweise über eine Länge von 0,5 bis 50 cm, besonders bevorzugt 2 bis 10 cm, beispielsweise durch Schnitte in Längsrichtung des Liners an derselben Stelle in Umfangsrichtung durchtrennt. An derselben Stelle in Umfangsrichtung bedeutet, dass es quasi eine Schnittlinie in Richtung der Länge des Liners mit Schnitten gibt, die auf dieser Schnittlinie liegen. Dies kann beispielsweise durch Schnittwerkzeuge erzielt werden, die mit dem Schneidwerkzeug in die Fasern abgesenkt und wieder von den Fasern entfernt werden. Dies kann beispielsweise durch Schnitte durch die Fasern der Querfaserschicht in Längsrichtung des Liners geschehen. Die Durchtrennungen oder Schnitte können entlang einer oder mehrerer Schnittlinien liegen, die vorzugsweise in Längsrichtung des Liners verlaufen (die Schnittlinien können auch einen anderen Winkel aufweisen). Entlang einer Schnittlinie können die Fasern der Querfaserschicht in gleichmäßig oder ungleichmäßig angeordneten Schnitten durchtrennt sein. Dabei haben benachbarte Schnitte mit einer Schnittlänge vorzugsweise einen Abstand von einer Abstandslänge voneinander. Der Median der Abstandslänge der Schnitte entlang einer Schnittlinie ist vorzugsweise kürzer als der Median der Schnittlänge der Schnitte. Der Median der Abstandslänge liegt vorzugsweise in einem Bereich von 20 bis 70% des Medians der Schnittlänge. Die Positionen in Umfangsrichtung der Durchtrennungen (oder Schnitte) der in Längsrichtung des Liners benachbarte Gruppierungen der Durchtrennungen weisen vorzugsweise einen Abstand von 10 bis 40% des Umfangs des Liners auf. Die Anzahl der Schnittlinien in Längsrichtung des Liners liegt vorzugsweise in einem Bereich von 1 bis 12, ganz besonders bevorzugt in einem Bereich von 2 bis 6. Diese die Faserschicht beschreibenden Merkmale insbesondere zur Durchtrennung können auch eine Matte betreffen. Auch eine Matte, bestehend aus mehreren Faserschichten, kann also Durchtrennungen aufweisen.

Die Schnittlinien verlaufen vorzugsweise nicht in einer Faltkante in Längsrichtung des Liners.

Die wenigstens eine Querfaserschicht kann, aber muss nicht die äußerste Faserschicht sein. Eine Querfaserschicht kann auch zusätzlich oder alternativ eine der anderen Faserschichten einer Matte sein.

Die Querfaserschicht weist vorzugsweise zu wenigstens 50 Gew.%, besonders bevorzugt zu wenigstens 60 Gew.%, Fasern auf, die in einem Winkel in einem Bereich von 45° bis 135°, besonders bevorzugt 80° bis 100°, relativ zur Längsrichtung des Liners angeordnet sind.

Erfindungsgemäß ist auch die Querfaserschicht harzgetränkt.

### Weitere Ausführungsformen

In einer weiteren Ausführungsform wird die der Erfindung zu Grunde liegende Aufgabe durch einen ausgehärteten Liner gelöst, dadurch gekennzeichnet, dass das Harzsystem des harzgetränkten erfindungsgemäßen Liners ausgehärtet ist. Beispielsweise kann im Sinne der Erfindung unter "ausgehärtet" verstanden werden, dass der Reststyrolgehalt unterhalb von 10 Gew.% auf Reinharz bezogen liegt.

In einer weiteren Ausführungsform wird die der Erfindung zu Grunde liegende Aufgabe durch ein Verfahren zur Herstellung des erfindungsgemäßen Liners, wobei das Verfahren wenigstens folgende Schritte umfasst:
a. Bereitstellen wenigstens einer Materialbahn enthaltend Fasern zur Herstellung einer Faserschicht,
b. Bereitstellen wenigstens einer weiteren Materialbahn zur Herstellung einer Querfaserschicht, die überwiegend Fasern aufweist, die in einem Winkel in einem Bereich von 45° bis 135° relativ zur Längsrichtung der Materialbahn angeordnet sind, wobei diese so angeordneten Fasern überwiegend wenigstens so lang sind, wie die Materialbahn breit ist,
c. Setzen von Schnitten in der weiteren Materialbahn, wobei die Fasern der weiteren Materialbahn durchtrennt werden, sodass diese in dem vorgenannten Winkel angeordneten Fasern der weiteren Materialbahn überwiegend im Median eine Länge in einem Bereich von 25 bis 50% der Breite der Materialbahn aufweisen,
d. Verbinden der Längskanten wenigstens einer der Materialbahnen, so dass diese Materialbahn zu einer schlauchförmigen Faserschicht wird, wobei die weitere Materialbahn zur Querfaserschicht wird, und die entstehenden schlauchförmigen Faserschichten ineinander liegen,
e. Tränken der Faserschichten mit Harzsystem.

In Schritt a. kann auch bereits eine Querfaserschicht gebildet werden.

Die Schnitte in Schritt c. können vorzugsweise in Längsrichtung des Liners erfolgen. Sie können aber auch in einer anderen Richtung erfolgen.

In Schritt d. können die Längskanten der weiteren Materialbahn beispielsweise über Vernadelung oder Vernähen verbunden werden. Dabei können sich die Längskanten überlappend verbunden oder auch auf Stoß verbunden werden. Bei Verbindung der Längskanten kann dabei beispielsweise die Trockenware des Liner entstehen.

Um den fertigen erfindungsgemäßen Liner zu erhalten, können auch noch weitere Schichten wie die Außenschicht oder die Innenschicht zugefügt werden. Vorzugsweise kann die Innenschicht mit einer Verankerungsschicht versehen (besonders bevorzugt kaschiert) werden.

Es können auch noch weitere Schichten hinzugefügt werden.

Die Schritte müssen nicht in der zeitlichen Abfolge der Reihenfolge ihrer Nennung erfolgen.

In Schritt c. können die Schnitte während dem Legen eines Geleges der Fasern oder auch später stattfinden, wenn aus dem Gelege bereits eine Materialbahn entstanden ist. Die Schnitte können mit Hilfe von mechanischen Messern, Scheren aber auch Laser oder Ultraschallmessern durchgeführt werden.

In einer weiteren Ausführungsform wird die der Erfindung zu Grunde liegende Aufgabe durch die Verwendung des erfindungsgemäßen Liners zum Sanieren von Rohrleitungen oder Kanälen gelöst.

In einer weiteren Ausführungsform wird die der Erfindung zu Grunde liegende Aufgabe durch ein Verfahren zum Sanieren von Rohrleitungen oder Kanälen, dadurch gekennzeichnet, dass man einen erfindungsgemäßen Liner in eine zu sanierende Rohrleitung beziehungsweise Kanal einbringt und den Liner in der Rohrleitung beziehungsweise im Kanal aushärtet. Die Aushärtung kann beispielsweise über UV-Licht oder thermisch geschehen.

In einer weiteren Ausführungsform wird die der Erfindung zu Grunde liegende Aufgabe durch eine sanierte Rohrleitung oder Kanal gelöst, dadurch gekennzeichnet, dass die Rohrleitung oder der Kanal einen erfindungsgemäßen Liner (ausgehärtet oder unausgehärtet) aufweist.

### Figuren

Im Folgenden werden die Figuren beschrieben. Diese Beschreibung geht auf konkrete und bevorzugte Ausgestaltungen der Erfindung ein, die die Erfindung nicht beschränken.
- Fig. 1: zeigt einen Liner 10 mit den verschiedenen Schichten im Querschnitt.
- Fig. 2: zeigt eine weitere Materialbahn 90, aus der die Querfaserschicht 30 entsteht.

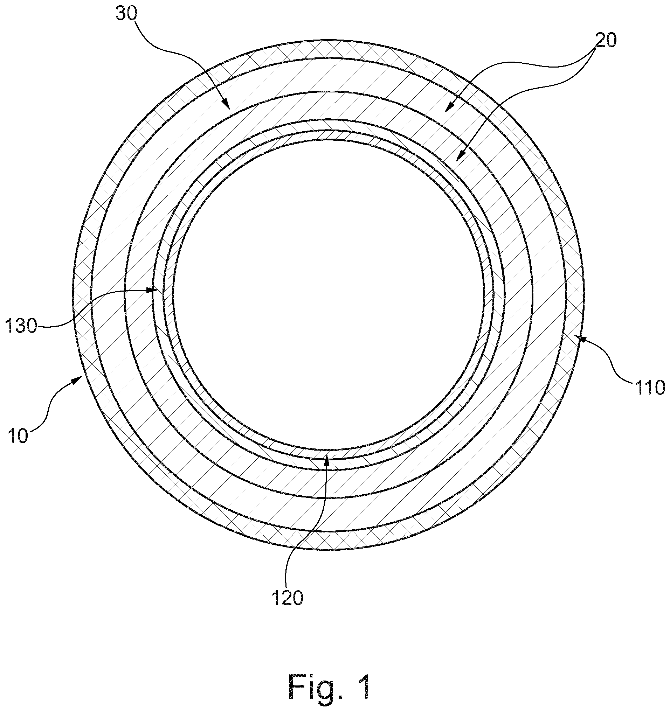

Fig. 1 zeigt einen Liner 10 mit einer Außenschicht 110, den Faserschichten 20, von denen die äußere Faserschicht eine Querfaserschicht 30 ist. Die Innenschicht 120 kann eine Polymerfolie sein, die auf ihrer Innenseite mit einer Verankerungsschicht 130 wie beispielsweise einem Polyestervlies kaschiert ist.

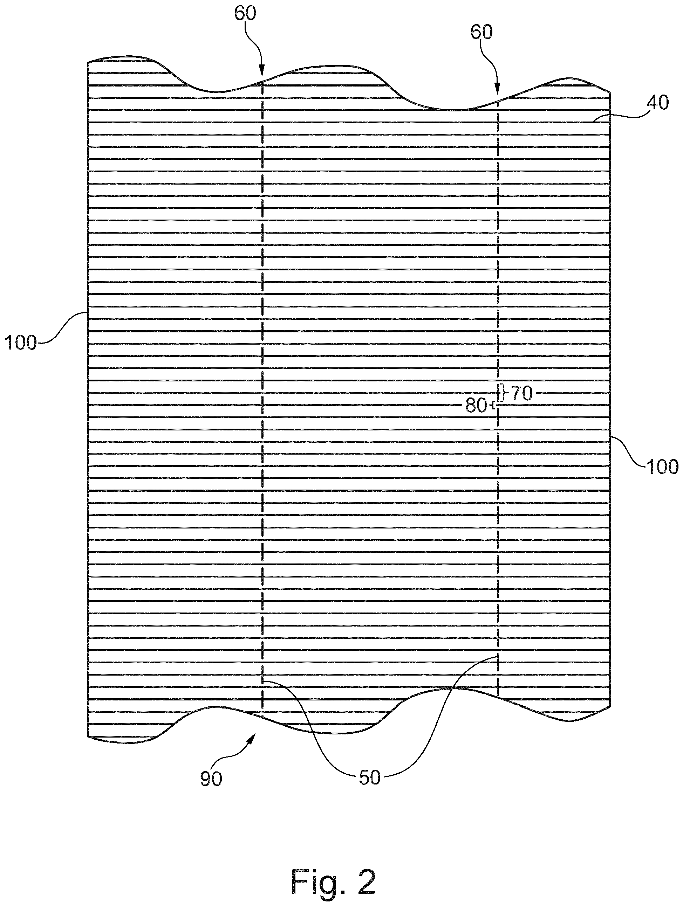

Fig. 2 zeigt die weitere Materialbahn 90. Aus der weiteren Materialbahn 90 entsteht durch Verbinden der Längskanten 100 eine schlauchförmige Querfaserschicht 30. Diese liegt beispielsweise ganz außen. Die Längskanten können durch Vernadeln verbunden werden, nachdem sie zunächst überlappend übereinandergelegt wurden. Die Fasern der Querfaserschicht 40 sind entlang von Schnittlinien 60 mit Hilfe von Schnitten 50 durchtrennt.

Die Schnittlänge 70 ist länger als die Abstandslänge 80. Die Schnitte 50 der verschiedenen Schnittlinien 60 sind versetzt angeordnet, so dass die Fasern der Querfaserschicht 40 in jedem Fall zumindest einmal durchtrennt sind.

### Ausführungsbeispiel

Die erfindungsgemäßen Liner bzw. Auskleidungsschläuche können nach an sich bekannten und in der Literatur beschriebenen Verfahren erhalten werden. Sofern im Folgenden das Verfahren nicht konkreter beschrieben wird, kann man davon ausgehen, dass der Fachmann sich im Folgenden an die an sich bekannten und in der Literatur bekannten Verfahren hält.

Auf einer 300 cm breiten Gelegeanlage wurden im Abstand von 1 cm Direktrovingstränge (Endlosfasern, 0°-Ware) aus Glasfaser in Längsrichtung mit einem Flächengewicht von insgesamt 600 g/m² eingeführt. Darauf wurden gleichmäßig Glasfasern in einem Winkel von 90° mit einem Flächengewicht von 600 g/m² aufgelegt (90°-Ware). Diese 90°-Ware hat in diesem Stadium der Herstellung noch eine Länge von 300 cm, also von der Breite des Geleges. Darauf wurde Schneidroving (CSM) mit einem Flächengewicht von 600 g/m² in zufälliger Ausrichtung aufgelegt, so dass die einzelnen Faserabschnitte des Schneidroving in allen möglichen Richtungen zu liegen kommen. Um den Schneidroving zu erhalten wurde der Direktroving in 10 cm lange Abschnitte geschnitten. Anschließend wurden die drei Faserschichten zu einer Matte mit Polyestergarn vernäht.

Es wurde auf dieselbe Art eine weitere Matte hergestellt.

Eine dieser so erhaltenen Bahnen wurde dann von rotierenden Messern in Längsrichtung geschnitten. Dazu waren im Abstand von 20 cm rotierende Messer angebracht, die auf der Seite des Direktroving gerade so weit in in die vorbeiziehende Matte in regelmäßigen Abständen eindringen, dass sie in die 90°-Ware etwa 10 cm lange Schnitte mit jeweils 5 cm Abstand entlang einer Schnittlinie eingebracht haben. Die rotierenden Messer waren so eingestellt, dass die benachbarten rotierenden Messer in jedem Fall immer dann einen Schnitt in der 90°-Ware gesetzt haben, wenn das benachbarte rotierende Messer für die 5 cm Abstand außerhalb der Matte war. So konnte sichergestellt werden, dass jede Faser der 90°-Ware mehrfach zerschnitten war. So wurde die Querfaserschicht erhalten.

Es waren also nun eine Matte mit zerschnittener 90°-Ware und eine Matte mit unzerschnittener 90°-Ware vorhanden. In eine Anlage zur Herstellung der Trockenware wurde ein Polymerschlauch eingeführt. Dieser Polymerschlauch bestand im Wesentlichen aus Polymer und hatte einen Durchmesser von 85 cm. Er wies aber auch eine übliche Styrolbarriere auf (PE/PA/PE). Um diesen Schlauch herum wurde die nicht zerschnittene Matte gelegt, so dass sie an den Längskanten überlappte, es nicht zu viel Spiel zwischen Polymerschlauch und Matte gab, und so dass der Direktroving angrenzend an den Schlauch zu liegen kam. Um diese erste Matte wurde nun die zweite Matte mit der zerschnittenen 90°-Ware herumgelegt, so dass der Direktroving außen zu liegen kam. Die Längskanten wurden so überlappt, dass die Matte ohne zu viel Spiel um die erste Matte herumgelegt werden konnte, und im Überlappungsbereich vernadelt. Die so entstandene Trockenware wurde mit einem für Kanalsanierungsliner üblichen UP Harz enthaltend Photoinitiator getränkt. Anschließend wurde um den getränkten Liner ein Schlauch wie der innenliegende Polymerschlauch mit einer Styrolbarriere gezogen. Als letzte Schicht wurde eine übliche graue Außenfolie gezogen, die Licht und UV-Strahlung nicht durchlässt und mechanisch stabil ist.

Mit diesem so erhaltenenen Kanalsanierungsliner konnte ein Abwasserkanal mit einem Durchmesser von 950 mm mit den üblichen Verfahren saniert werden, indem der Liner in den Abwasserkanal eingezogen, aufgestellt und mit UV-Licht ausgehärtet wurde.

### Bezugszeichen

- 10: Liner
- 20: Faserschichten
- 30: Querfaserschicht
- 40: Fasern der Querfaserschicht
- 50: Durchtrennungen oder Schnitte
- 60: Schnittlinien
- 70: Schnittlänge
- 80: Abstandslänge
- 90: Weitere Materialbahn zur Herstellung der Querfaserschicht
- 100: Längskanten der Materialbahn
- 110: Außenschicht
- 120: Innenschicht
- 130: Verankerungsschicht

## Patentansprüche

1. Schlauchförmiger Liner (10) für die Sanierung von Rohrleitungen oder Kanälen, der Liner umfassend harzgetränkte Faserschichten (20), wobei wenigstens eine Faserschicht eine Querfaserschicht (30) ist, die überwiegend Fasern aufweist, die in einem Winkel in einem Bereich von 45° bis 135° relativ zur Längsrichtung des Liners (10) angeordnet sind, **dadurch gekennzeichnet, dass** diese so angeordneten Fasern der Querfaserschicht (40) im Median eine Länge in einem Bereich von 20 bis 50% des Umfangs des Liners (10) aufweisen.

2. Liner (10) gemäß Anspruch 1, **dadurch gekennzeichnet, dass** die Querfaserschicht (30) überwiegend Fasern (40) aufweist, die in einem Winkel in einem Bereich von 80° bis 100° relativ zur Längsrichtung des Liners (10) angeordnet sind.

3. Liner (10) gemäß einem der vorhergehenden Ansprüche, **dadurch gekennzeichnet, dass** die wenigstens eine Querfaserschicht (30) überwiegend Fasern (40) aufweist, die sich im Wesentlichen von der Länge her um den Umfang des Liners (20) erstrecken, die aber an wenigstens einer Stelle durchtrennt sind.

4. Liner (10) gemäß Anspruch 3, **dadurch gekennzeichnet, dass** die Durchtrennungen (50) gruppiert sind und die Positionen in Umfangsrichtung der Durchtrennungen (50) der in Längsrichtung des Liners (10) benachbarte Gruppierungen der Durchtrennungen (50) einen Abstand von 10 bis 40% des Umfangs des Liners (10) aufweisen.

5. Liner (10) gemäß einem der vorhergehenden Ansprüche, **dadurch gekennzeichnet, dass** die Fasern der Querfaserschicht (40) durch Schnitte in Längsrichtung des Liners (10) jeweils mit einer Länge von 0,5 bis 50 cm durchtrennt sind.

6. Liner (10) gemäß einem der vorhergehenden Ansprüche, **dadurch gekennzeichnet, dass** die Durchtrennungen (50) entlang einer oder mehrerer Schnittlinien (60) liegen, die in Längsrichtung des Liners (10) verlaufen.

7. Liner (10) gemäß Anspruch 6, **dadurch gekennzeichnet, dass** benachbarte Schnitte (50) mit einer Schnittlänge (70) einen Abstand von einer Abstandslänge (80) voneinander aufweisen und der Median der Abstandslänge (80) der Schnitte (50) entlang einer Schnittlinie (60) kürzer als der Median der Schnittlänge (70) der Schnitte (50) ist und der Median der Abstandslänge (80) in einem Bereich von 20 bis 70% des Medians der Schnittlänge (70) liegt.

8. Liner (10) gemäß einem der vorhergehenden Ansprüche, **dadurch gekennzeichnet, dass** die äußerste Faserschicht (20) eine Querfaserschicht (30) ist.

9. Ausgehärteter Liner (10), **dadurch gekennzeichnet, dass** das Harzsystem eines harzgetränkten Liners (10) gemäß einem der Ansprüche 1 bis 8 ausgehärtet ist.

10. Verfahren zur Herstellung eines Liners (10) gemäß einem der Ansprüche 1 bis 8, wobei das Verfahren wenigstens folgende Schritte umfasst:
a. Bereitstellen wenigstens einer Materialbahn enthaltend Fasern zur Herstellung einer Faserschicht (20),
b. Bereitstellen wenigstens einer weiteren Materialbahn zur Herstellung einer Querfaserschicht, die überwiegend Fasern aufweist, die in einem Winkel in einem Bereich von 45° bis 135° relativ zur Längsrichtung der Materialbahn angeordnet sind, wobei diese so angeordneten Fasern überwiegend so lang sind, wie die Materialbahn breit ist,
c. Setzen von Schnitten in Längsrichtung der weiteren Materialbahn, wobei die Fasern der weiteren Materialbahn durchtrennt werden, sodass diese in dem vorgenannten Winkel angeordneten Fasern der weiteren Materialbahn überwiegend im Median eine Länge in einem Bereich von 25 bis 50% der Breite der Materialbahn aufweisen,
d. Verbinden der Längskanten wenigstens einer der Materialbahnen, so dass diese Materialbahn zu einer schlauchförmigen Faserschicht wird, wobei die weitere Materialbahn zur Querfaserschicht wird, und die entstehenden schlauchförmigen Faserschichten ineinander liegen,
e. Tränken der Faserschichten mit Harzsystem.

11. Verwendung des Liners (10) gemäß einem der Ansprüche 1 bis 9 zum Sanieren von Rohrleitungen oder Kanälen.

12. Verfahren zum Sanieren von Rohrleitungen oder Kanälen, **dadurch gekennzeichnet, dass** man einen Liner (10) gemäß einem der Ansprüche 1 bis 8 in eine Rohrleitung oder Kanal einbringt und den Liner (10) in der Rohrleitung oder Kanal aushärtet.

13. Sanierte Rohrleitung oder sanierter Kanal, **dadurch gekennzeichnet, dass** die Rohrleitung oder Kanal einen ausgehärteten Liner (10) gemäß Anspruch 9 aufweist.

## Claims

1. A tubular liner (10) for the rehabilitation of pipelines or canals, the liner containing resin-impregnated fibrous layers (20), wherein at least one fibrous layer is a transverse fibrous layer (30) which mainly comprises fibres arranged at an angle in a range from 45 degrees to 135 degrees with respect to the longitudinal direction of the liner (10), **characterized in that** the fibres of the transverse fibrous layer (40) arranged in this way have a median length in a range from 20 to 50% of the circumference of the liner (10).

2. The liner (10) according to claim 1, **characterised in that** the transverse fibrous layer (30) mainly comprises fibres (40) arranged at an angle in a range from 80 degrees to 100 degrees with respect to the longitudinal direction of the liner (10).

3. The liner (10) according to any one of the preceding claims, **characterised in that** the at least one transverse fibrous layer (30) mainly comprises fibres (40) extending longitudinally essentially around the circumference of the liner (20), which, however, are severed at at least one point.

4. The liner (10) according to claim 3, **characterised in that** the severings (50) are grouped and the positions in the circumferential direction of the severings (50) of groups of severings (50) adjacent in the longitudinal direction of the liner (10) have distances of from 10 to 40% of the circumference of the liner (10).

5. The liner (10) according to any one of the preceding claims, **characterised in that** the fibres of the transverse fibrous layer (40) are severed by cuts in the longitudinal direction of the liner (10) having a length of from 0.5 to 50 cm, respectively.

6. The liner (10) according to any one of the preceding claims, **characterised in that** the severings (50) extend along one or several cutting lines (60) arranged in the longitudinal direction of the liner (10).

7. The liner (10) according to claim 6, **characterised in that** adjacent cuts (50) having a cutting length (70) are spaced from each other by one spacing (80) and the median of the spacing (80) of the cuts (50) along one cutting line (60) is shorter than the median of the cutting length (70) of the cuts (50) and the median of the spacing (80) is in a range from 20 to 70% of the median of the cutting length (70).

8. The liner (10) according to any one of the preceding claims, **characterised in that** the outermost fibrous layer (20) is a transverse fibrous layer (30).

9. A cured liner (10), **characterised in that** the resin system of a resin-impregnated liner (10) according to any one of claims 1 to 8 is cured.

10. A process for manufacturing a liner (10) according to any one of claims 1 to 8, wherein the process comprises at least the following steps:
a. providing at least one material sheet containing fibres for manufacturing a fibrous layer (20),
b. providing at least one additional material sheet for manufacturing a transverse fibrous layer which mainly comprises fibres arranged at an angle in a range from 45 degrees to 135 degrees with respect to the longitudinal direction of the material sheet wherein the fibres arranged in such a way are mainly as long as the material sheet is wide,
c. making longitudinal cuts in the additional material sheet, wherein the fibres of the additional material sheet are severed such that said fibres of the additional material sheet arranged at the above-mentioned angle mainly have a median length in a range from 25 to 50% of the width of the material sheet,
d. connecting the longitudinal edges of at least one of the material sheets such that this material sheet becomes a tubular fibrous layer, wherein the additional material sheet becomes the transverse fibrous layer and the formed tubular fibrous layers are arranged in one another,
e. impregnating the fibrous layers with a resin system.

11. Use of the liner (10) according to any one of claims 1 to 9 for the rehabilitation of pipelines or canals.

12. A process for rehabilitating pipelines or canals, **characterised in that** a liner (10) according to any one of claims 1 to 8 is introduced into the pipeline or canal and the liner (10) is cured in the pipeline or canal.

13. A rehabilitated pipeline or rehabilitated canal, **characterised in that** the pipeline or canal comprises a cured liner (10) according to claim 9.

## Revendications

1. Revêtement tubulaire (10) pour la réhabilitation de canalisations ou de conduits, le revêtement comprenant des couches de fibres imprégnées de résine (20), dans lequel au moins une couche de fibres est une couche de fibres transversales (30) comprenant principalement des fibres disposées à un angle dans une plage de 45° à 135° par rapport à la direction longitudinale du revêtement (10), **caractérisé en ce que** ces fibres de la couche de fibres transversales (40) ainsi disposées ont une longueur médiane comprise entre 20 et 50 % du contour du revêtement (10).

2. Revêtement (10) selon la revendication 1, **caractérisé en ce que** la couche de fibres transversales (30) comprend principalement des fibres (40) disposées selon un angle compris entre 80° et 100° par rapport à la direction longitudinale du revêtement (10).

3. Revêtement (10) selon l'une quelconque des revendications précédentes, **caractérisé en ce que** l'au moins une couche de fibres transversales (30) est constituée principalement de fibres (40) qui s'étendent sensiblement dans le sens de la longueur autour du contour du revêtement (20), mais qui sont sectionnées en au moins un point.

4. Revêtement (10) selon la revendication 3, **caractérisé en ce que** les sections (50) sont groupées et que les positions dans le sens du contour des sections (50) des groupements adjacents des sections (50) dans le sens longitudinal du revêtement (10) ont une distance de 10 à 40 % du contour du revêtement (10).

5. Revêtement (10) selon l'une quelconque des revendications précédentes, **caractérisé en ce que** les fibres de la couche de fibres transversales (40) sont sectionnées par des coupes dans le sens longitudinal du revêtement (10) d'une longueur de 0,5 à 50 cm chacune.

6. Revêtement (10) selon l'une quelconque des revendications précédentes, **caractérisé en ce que** les sections (50) se trouvent le long d'une ou plusieurs lignes de coupe (60) courant dans le sens longitudinal du revêtement (10).

7. Revêtement (10) selon la revendication 6, **caractérisé en ce que** des sections adjacentes (50) avec une longueur de coupe (70) ont une distance d'une longueur de distance (80) les unes des autres et que la médiane de la longueur médiane de distance (80) des sections (50) le long d'une ligne de section (60) est plus courte que la médiane de la longueur de coupe (70) des sections (50) et que la médiane de la longueur de distance (80) est dans une plage de 20 à 70 % de la médiane de la longueur de coupe (70).

8. Revêtement (10) selon l'une quelconque des revendications précédentes, **caractérisé en ce que** la couche de fibres la plus externe (20) est une couche de fibres transversales (30).

9. Revêtement durci (10) **caractérisé en ce que** le système de résine d'un revêtement (10) selon l'une quelconque des revendications 1 à 8 imprégné de résine est durci.

10. Procédé de fabrication d'un revêtement (10) selon l'une quelconque des revendications 1 à 8, dans lequel le procédé comprend au moins les étapes suivantes :
a. préparation d'au moins une bande de matériau contenant des fibres pour la production d'une couche de fibres (20),
b. préparation d'au moins une bande de matériau supplémentaire pour la production d'une couche de fibres transversales, qui comprend essentiellement des fibres disposées selon un angle compris entre 45° et 135° par rapport à la direction longitudinale de la bande de matériau, ces fibres disposées de cette manière ayant une longueur essentiellement égale à la largeur de la bande de matériau,
c. exécution de coupes dans le sens longitudinal de la bande de matériau supplémentaire, les fibres de la bande de matériau supplémentaire étant coupées de telle sorte que ces fibres de la bande de matériau supplémentaire, disposées selon l'angle susmentionné, aient essentiellement une longueur médiane de 25 à 50 % de la largeur de la bande de matériau,
d. union des bords longitudinaux d'au moins une des bandes de matériau de sorte que cette bande de matériau devienne une couche de fibres tubulaires, la bande de matériau supplémentaire devenant la couche de fibres transversales, et les couches de fibres tubulaires résultantes se trouvant à l'intérieur les unes des autres,
e. imprégnation des couches de fibres avec un système de résine.

11. Utilisation du revêtement (10) selon l'une quelconque des revendications 1 à 9 pour la réhabilitation de tuyaux ou de canaux.

12. Procédé de réhabilitation de tuyaux ou de canaux, **caractérisé en ce qu'**un revêtement (10) selon l'une quelconque des revendications 1 à 8 est introduit dans un tuyau ou un canal et que le revêtement (10) est durci dans le tuyau ou le canal.

13. Tuyau ou canal réhabilité, **caractérisé en ce que** le tuyau ou le canal est doté d'un revêtement durci (10) selon la revendication 9.
